# EUROPEAN PATENT APPLICATION

(11) **EP 0 523 549 A2**
(43) Date of publication of application: **20.01.1993**
(21) Application number: 92111684.4
(22) Date of filing: 09.07.1992
(51) Int. Cl.: B29C 45/27

(54) **Injection molding manifold with removable inserts**

(30) Priority: 19.07.1991 CA 2047461
(71) Applicant: MOLD-MASTERS LIMITED, Georgetown Ontario L7G 4X5 (CA)
(72) Inventor: Gellert, Jobst U., Georgetown, Ontario L7G 2X1 (CA); Renwick, Craig W., Georgetown, Ontario L7C 5K5 (CA)
(74) Representative: Grünecker, Kinkeldey, Stockmair & Schwanhäusser Anwaltssozietät

(57) **Abstract**

A temperature gated injection molding system having a melt distribution manifold with removable steel inserts (82) seated in tapered transverse openings. The inserts are cast or machined to various standard configurations having a melt duct extending from an inlet (98) to one or more outlets (100) to provide the melt passage with smoothly curved bends and/or branches. Each insert has a flange portion (88) which seats against a shoulder in the manifold, and a locating pin to align the melt duct with the melt passage (112) in the manifold. In one embodiment, the insert has a retaining screw (126) which is easily removable to clean or replace the insert.

## Description

### BACKGROUND OF THE INVENTION

This invention relates generally to injection molding apparatus and more particularly to removable inserts seated in the distribution manifold to provide the melt passage with smoothly curved bends.

Multi-cavity injection molding systems having a heated melt distribution manifold are well known. Normally, the manifold has a melt passage which branches longitudinally from a common inlet on its rear surface to a number of spaced outlets on its forward surface. This requires the melt passage to have a number of bends or corners around which the pressured melt must flow. It is also well known that the length and size of each branch of the melt passage must be equal or balanced and that sharp bends or corners can produce unacceptable shear stress in the melt. Various systems have been provided to facilitate making improved melt distribution manifolds which overcome these problems. For instance, U.S. patent number 4,609,138 to Harrison which issued September 2, 1986 shows a method of making manifolds by drilling and plugging longitudinally. This method has the disadvantage that it is difficult to avoid sharp corners in the melt passage. The applicant's U.S. patent number 4,648,546 which issued March 10, 1987 describes a method to overcome this problem by making a manifold out of two composite plates in which the melt passage is machined. The applicant's Canadian patent application serial number 2,017,055-7 filed May 17, 1990 entitled "Injection Molding Cast Manifold" shows a method of making a manifold having a smoothly curved melt passage by casting. Mold-Masters Canadian patent application serial number 2,032,396-5 filed December 19, 1990 entitled "Multi-Cavity Melt Distribution Manifold" discloses another manifold made of two plate portions which are integrally brazed together. While these previous manifolds are suitable for many applications, they have the disadvantages that they are relatively costly to make and that the melt passage corners or bends cannot be easily cleaned out if necessary.

Valve pin bushings which are seated in transverse openings in the manifold for valve gated injection molding systems are also known in the art. The applicant's U.S. patent number 4,026,518 which issued May 31, 1977 shows an early example. U.S. patent number 4,740,151 to Schmidt et al which issued April 26, 1988 discloses an improved valve pin bushing having a flanged portion which extends rearwardly to also provide a seal to prevent melt escaping between the manifold and the back plate. The applicant's U.S. patent number 4,932,858 which issued June 12, 1990 provides a similar valve bushing which also has a melt duct which branches into two arms which extend to opposite sides of the valve pin. The primary function of these valve pin bushings is to join the melt passage to the valve pin bore extending through the bushing. The removable inserts of the present invention are for temperature gated injection molding and thus do not have a valve pin bore. The term "temperature gated" is used in the present application to refer to injection molding apparatus or systems in which gating is controlled by the temperature of the melt and are not valve gated. Thus, "temperature gating" includes various types of gating such as sprue gating, hot tip gating, hot edge gating and thermal gating.

### SUMMARY OF THE INVENTION

Accordingly, it is an object of the present invention to at least partially overcome the disadvantages of the prior art by providing an injection molding system or apparatus having removable inserts seated in tapered openings in the manifold to provide the melt passage with smoothly curved bends and/or branches.

To this end, in one of its aspects, the invention provides temperature gated injection molding apparatus having a plurality of spaced heated nozzles each seated in a well in a cooled cavity plate, each nozzle having a rear end and a bore extending therethrough to a gate leading to a cavity, a melt distribution manifold mounted between the rear ends of the nozzles and a back plate, and a melt passage which receives melt at a common inlet and branches in the manifold to the bore of each nozzle to convey melt to the gates, having the improvement wherein a plurality of removable inserts are seated in respective openings in the manifold, each insert has a rear face, a forward face, a tapered outer surface, and a melt duct extending therethrough, the melt duct has at least one smoothly curved bend and extends from an inlet to at least one outlet to form a portion of the melt passage, the inlet being on one of the rear face and the outer surface, the at least one outlet being on one of the forward face and the outer surface.

Further objects and advantages of the invention will appear from the following description taken together with the accompanying drawings.

### BRIEF DESCRIPTION OF THE DRAWINGS

Figure 1 is a top view of a temperature gated injection molding system showing a portion of a manifold having an H configuration seated in a mold having removable inserts according to one embodiment of the invention,
Figure 2 is a sectional view along line 2 - 2 in Figure 1,
Figure 3 is a sectional view along line 3 - 3 in Figure 1,
Figures 4a, 4b and 4c are isometric views of the inserts seen in Figures 2 and 3,
Figure 5 is a similar sectional view showing an insert according to another embodiment of the invention, and
Figure 6 is another sectional view showing another embodiment of the invention.

### DETAILED DESCRIPTION OF THE DRAWINGS

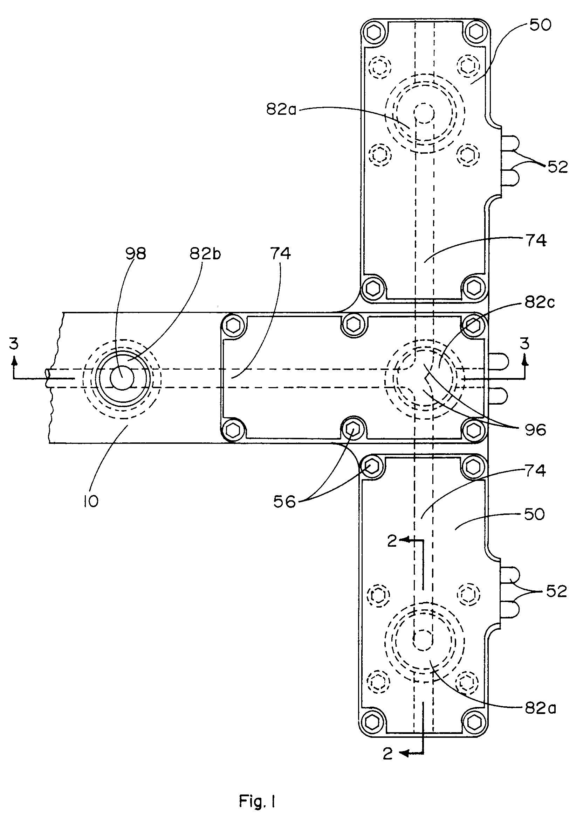

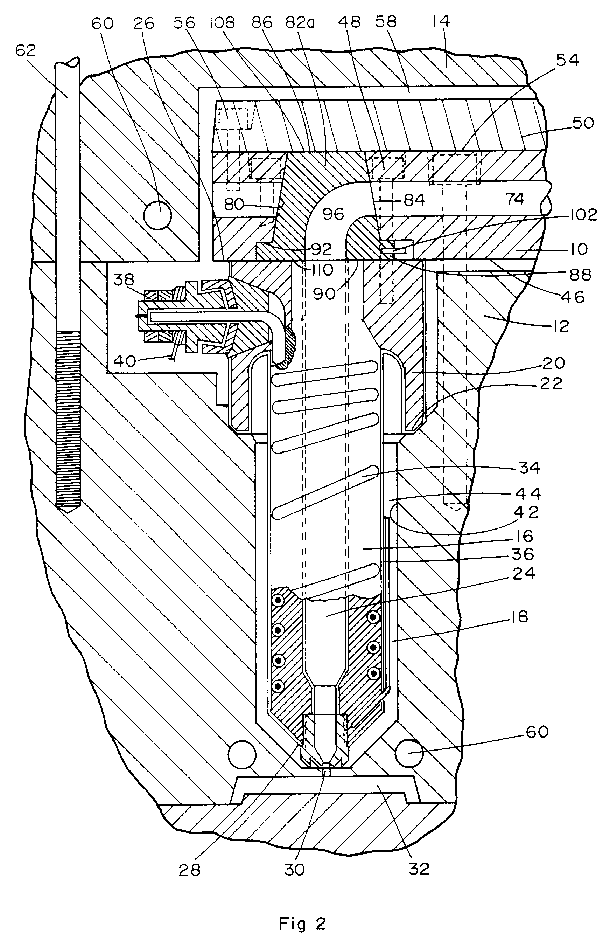

Reference is first made to Figures 1 and 2 which show a portion of a steel melt distribution manifold 10 having an H configuration seated in a mold between a cavity plate 12 and a back plate 14. As is well known, the mold usually has a greater number of plates depending upon the application, but only the cavity plate 12 and back plate 14 are shown for ease of illustration. This multi-cavity sprue gated injection molding system or apparatus has a number of heated nozzles 16. Each nozzle 16 is seated in a well 18 in the cavity plate 12 by a circumferential insulation flange 20 which sits on a circumferential shoulder 22. In this embodiment, the nozzle 16 has a central bore 24 extending therethrough from a rear end 26 to a forward end 28 in alignment with a gate 30 leading to a cavity 32. The nozzle 16 is heated by an electrically insulated heating element 34 which is integrally brazed in a spiral channel in its outer surface 36 and extends to an external terminal 38 to provide a connection for a lead 40 from an external power source (not shown). The outer surface 36 of the nozzle 16 is separated from the inner surface 42 of the well 18 by an insulative air space 44.

The rear ends 26 of the nozzles 16 are secured against the forward surface 46 of the manifold 10 by bolts 48. A number of electrical plate heaters 50 which receive power through terminals 52 are secured to the rear surface 54 of the manifold 10 by bolts 56. An insulative air space 58 is provided between the heated manifold 10 and the cavity plate 12 and back plate 14 which are cooled by pumping cooling water through cooling conduits 60. The back plate 14 is secured to the cavity plate 12 by bolts 62.

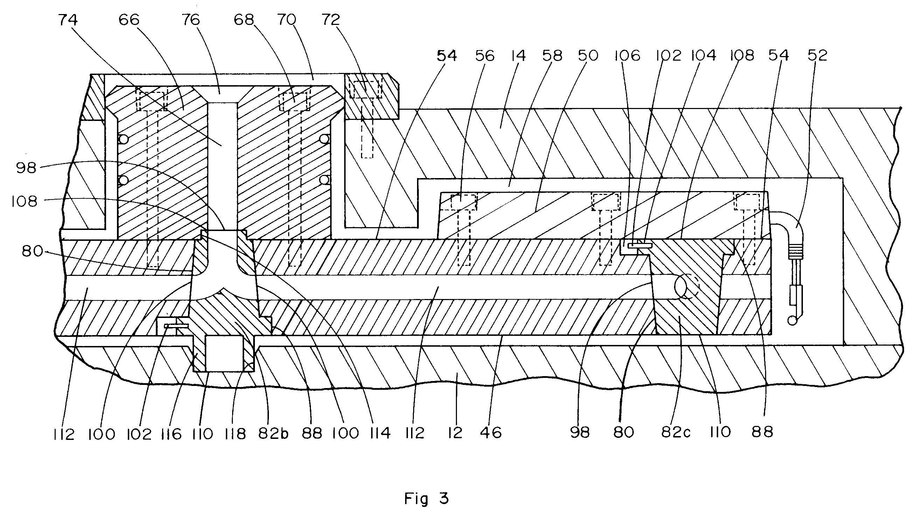

As seen in Figure 3, a manifold extension 66 which extends rearwardly through the back plate 14 is fastened to the rear surface 54 of the manifold 10 by bolts 68. The manifold extension 66 is located by a locating ring 70 which is secured to the back plate 14 by bolts 72.

A melt passage 74 extends from a common inlet 76 in the manifold extension 66 and branches in the manifold 10 to the bore 24 of each nozzle 16 to convey melt to the gates 30 leading to the cavities 32. Depending upon the multi-cavity manifold configuration, the melt passage 74 must have several 90° bends or corners, some of which are also branches so the melt flow splits in different directions. These bends and/or branches in the melt passage 74 are in different directions depending upon the configuration of the manifold 10 and their location in it. The present invention provides a number of removable steel inserts 82 which are seated in matching tapered transverse openings 80 in the manifold 10 which are cast and/or machined to have various standard configurations to form these bends and/or branches.

Each insert 82 has an outer surface 84 which tapers outwardly from a smaller first end 86 to an outwardly projecting flange portion 88 adjacent a larger second end 90. The flange portion 88 seats against a matching circumferential shoulder 92 in the tapered opening 80 in the manifold 10 to accurately position it in the opening. The insert 82 is machined or cast to have a melt duct 94 which extends through it around a smoothly curved bend 96 from an inlet 98 to one or more outlets 100. In this embodiment, a locating pin 102 extends from a bore 104 in the flange portion 88 of the insert 82 into a matching slot 106 in the surrounding manifold 10 to accurately locate the insert 82 so the melt duct 94 is aligned with the matching melt passage 74 in the surrounding manifold 10.

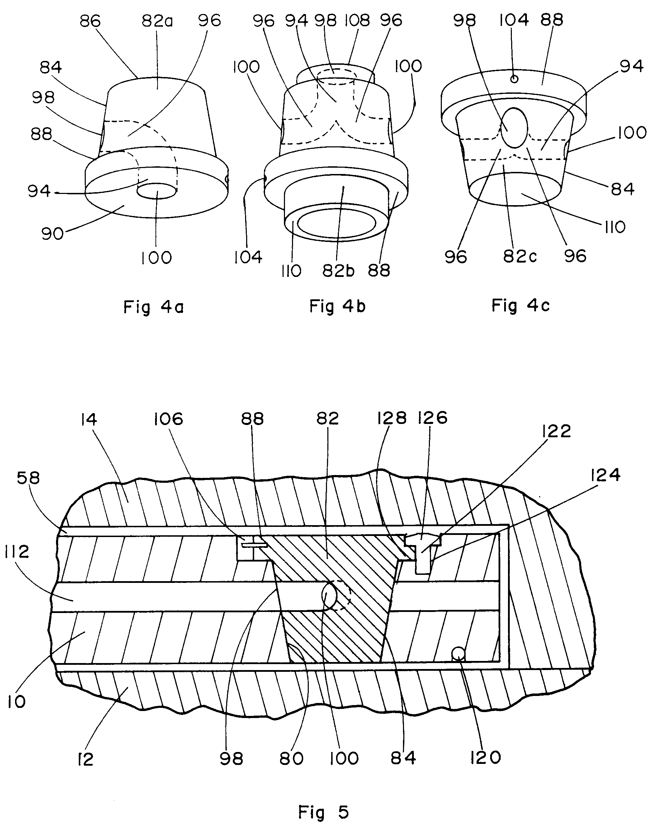

The transverse openings 80 in the manifold 10 and the inserts 82 in them can be oriented so they are tapered either forwardly or rearwardly, depending upon the situation. Thus, either the smaller first end 86 or the larger second end 90 can form the rear and forward faces 108, 110 of each insert 82. Similarly, the melt duct 94 through different inserts 82 bends and/or branches in different directions between the inlet 98 and outlet or outlets 100 on the rear face 108, outer surface 84, or forward face 110. For instance, as seen in Figures 2 and 4a, the embodiment of the insert 82a mounted adjacent each nozzle 16 has the melt duct 94 extending between an inlet 98 on the outer surface 84 and a single outlet 100 on the forward face 110 in direct alignment with the central bore 24 through the nozzle 16. The bend 96 in the melt duct 94 between the longitudinal portion 112 of the melt passage 74 and the central bore 24 is smoothly curved to ensure optimum rheological flow of the melt. The rear face 108 of the insert 82a is flush with the rear surface 54 of the manifold 10 and the forward face 110 of the insert 82a is flush with the forward surface 46 of the manifold 10. The insert 82a is retained securely and accurately in position in the tapered opening 80 by the rear end 26 of the nozzle 16, but is easily removable for cleaning or replacement when the nozzle 16 is removed.

On the other hand, as seen in Figures 3 and 4b, embodiment of the insert 82b mounted centrally in the manifold 10 has the melt duct 94 branching from an inlet 98 on the rear face 108 to two smaller diameter outlets 100 on the tapered outer surface 84. The inlet 98 is aligned with the melt passage 74 in the manifold extension 66, and the two outlets 100 are aligned with longitudinal portions 112 of the melt passage 74 which extend in opposite directions in the manifold 10. The bends 96 in the melt duct 94 which branch from the inlet 98 to the two outlets 100 are also smoothly curved. In this embodiment of the insert 82b, the rear face 108 extends rearwardly into a seat 114 in the manifold extension 66. The forward face 110 forms a locating ring portion 116 which similarly extends forwardly into a seat 118 in the cavity plate 12 to accurately locate the manifold 10 in this position. This insert 82b is also securely and accurately retained in this position by the cavity plate 12, but is easily removable when the manifold 10 is removed.

The other embodiment of the insert 82c seen in Figures 3 and 4c has the melt duct 94 branching from an inlet 98 on the outer surface 84 to two outlets 100 also on the outer surface 84 which extend in opposite directions. The bends 96 in the melt duct 94 which branch from the inlet 98 to the two outlets 100 are also very smoothly curved. In this case, the forward face 110 of the insert 82c is flush with the forward surface 46 of the manifold 10. The insert 82c is retained securely in position with its rear face 108 flush with the rear surface 54 of the manifold 10 by the plate heater 50. However, it is also easily removable for cleaning or replacement by removing the plate heater 50.

In use, the system is assembled as shown and electrical power is applied to terminals 38 of the electrical heating elements 34 in the nozzles 16 and the terminals 52 of the plate heaters 50 to heat the nozzles 16 and the manifold 10 to a predetermined operating temperature. Pressurized melt is applied from a molding machine (not shown) to the inlet 76 of the melt passage 74 according to a predetermined cycle. The melt flows through the nozzles 16 and gates 30 into the cavities 32. After the cavities are filled and a suitable packing and cooling period has expired, the injection pressure is released. The mold is then opened to eject the molded products. After ejection, the mold is closed and the cycle is repeated continuously with a cycle time dependent upon the size of the cavities and the type of material being molded.

Reference is now made to Figure 5 which shows an insert 82 according to another embodiment of the invention seated in a tapered opening 80 in the manifold 10. In this embodiment, similar to Figure 4c, the melt duct 94 through the insert branches from an inlet 98 on the outer surface 84 to two outlets 100 which are also on the outer surface and extend in opposite directions. In this case, the manifold 10 is heated by an electrical heating element 120 which is integrally brazed into it. Thus, it does not have plate heaters attached to it, but the insert 82 is held securely in place by a retaining screw 122. As can be seen, the retaining screw 122 screws into a threaded bore 124 in the manifold 10, and its head 126 engages part 128 of the flange portion 88 of the insert 82. The insert 82 can easily be removed for cleaning or replacement by removing the screw 122. While only a single screw 122 is shown, additional screws can be provided around the insert 82 in other applications.

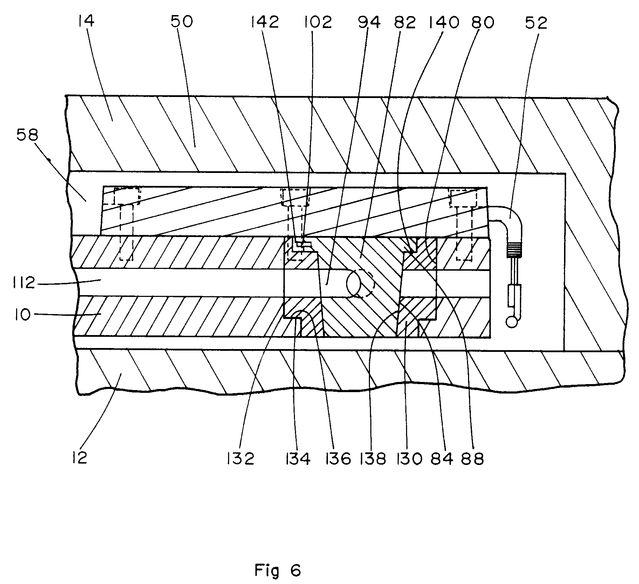

Reference is now made to Figure 6 which shows another embodiment of the invention in which an insert 82 is seated in a bushing 130 which, in turn, is received in an opening 80 in the manifold 10. In this case, the opening 80 in the manifold 10 is generally cylindrical rather than tapered to receive the matching generally cylindrical outer surface 132 of the bushing 130. As can be seen, the outer surface 132 of the bushing 130 has a shoulder 134 which seats against a shoulder 136 in the opening 80 in the manifold. In this embodiment, the bushing 130 is securely press fitted into place in the opening 80 before the longitudinal portion 112 of the melt passage 74 is drilled through it and the manifold 10. Each bushing 130 has an inner surface 138 which is tapered to match the tapered outer surface 84 of the insert 82. The inner surface 138 of the bushing 130 also has a shoulder 140 against which the flange portion 88 of the insert 82 is seated. As described above, a locating pin 102 extends from the flange portion 88 of the insert 82 into a matching slot 142 in the bushing 130 to accurately locate the insert 82 so the melt duct 94 is aligned with the melt passage 74 in the surrounding bushing 130 and manifold 10. In this case, the insert 82 is securely retained in this position by the plate heater 50, but it is easily removed from the bushing 130 for cleaning and replacement.

While the description of the sprue gated injection molding system with removable inserts in the manifold has been given with respect to preferred embodiments, it will be evident that various modifications are possible without departing from the scope of the invention as understood by those skilled in the art and defined in the following claims. For instance, it is apparent that the manifold 10 can have numerous other configurations in which various other removable inserts 82 can be seated to provide the melt passage 74 with smoothly curved bends 96.

## Claims

1. In a temperature gated injection molding apparatus having a plurality of spaced heated nozzles each seated in a well in a cooled cavity plate, each nozzle having a rear end and a bore extending therethrough to a gate leading to a cavity, a melt distribution manifold mounted between the rear ends of the nozzles and a back plate, and a melt passage which receives melt at a common inlet and branches in the manifold to the bore of each nozzle to convey melt to the gates, the improvement wherein;
a plurality of removable inserts are seated in respective openings in the manifold, each insert has a rear face, a forward face, a tapered outer surface, and a melt duct extending therethrough, each opening in the manifold is tapered to match the outer surface of the respective insert, the melt duct has at least one smoothly curved bend and extends from an inlet to at least one outlet to form a portion of the melt passage, the inlet being on one of the rear face and the outer surface, the at least one outlet being on one of the forward face and the outer surface.

2. Injection molding apparatus as claimed in claim 1 wherein each insert has a first end and a second end, the outer surface tapers outwardly from the first end towards the second end, each insert has a flange portion which projects outwardly adjacent the second end, and the flange portion seats against a matching shoulder in the respective tapered opening in the manifold.

3. Injection molding apparatus as claimed in claim 1 wherein each insert is seated in a bushing which is received in the respective opening in the manifold.

4. Injection molding apparatus as claimed in claim 3 wherein each opening in the manifold is generally cylindrical, and each bushing has a tapered inner surface to match the outer surface of the insert and a generally cylindrical outer surface to match the respective opening in the manifold.

5. Injection molding apparatus as claimed in claim 4 wherein each insert has a first end and a second end, the outer surface tapers outwardly from the first end towards the second end, the insert has a flange portion which projects outwardly adjacent the second end, and the flange portion seats against a matching shoulder on the inner surface of the respective bushing.

6. Injection molding apparatus as claimed in claim 5 wherein the outer surface of each bushing has a shoulder which seats against a matching shoulder in the respective opening in the manifold.

7. Injection molding apparatus as claimed in claim 2 wherein a locating pin extends from each insert into the surrounding manifold to accurately locate the respective insert with the melt duct in alignment with the melt passage in the surrounding manifold.

8. Injection molding apparatus as claimed in claim 7 wherein the locating pin extends from a bore in each flange portion of the respective insert into a matching slot in the surrounding manifold.

9. Injection molding apparatus as claimed in claim 7 wherein at least one retaining screw extends into the manifold and engages the flange portion of one of said inserts to removably retain the insert in the respective opening in the manifold.

10. Injection molding apparatus as claimed in claim 7 wherein the melt duct extends through a plurality of said inserts from an inlet on the outer surface to an outlet on the forward face, the outlet on the forward face being aligned with the bore extending through a respective one of the nozzles.

11. Injection molding apparatus as claimed in claim 7 wherein the melt duct branches in at least one of said inserts from an inlet on the rear face to a plurality of spaced outlets on the outer surface.

12. Injection molding apparatus as claimed in claim 7 wherein the melt duct branches in at least one of said inserts from an inlet on the outer surface to a plurality of spaced outlets on the outer surface.
